# EUROPÄISCHE PATENTSCHRIFT

(11) **EP 2 097 215 B1**
(45) Veröffentlichungstag und Bekanntmachung des Hinweises auf die Patenterteilung: **30.12.2009**
(21) Anmeldenummer: 07819340.6
(22) Anmeldetag: 26.10.2007
(51) Int. Cl.: B23Q 16/02

(54) **VORRICHTUNG ZUR POSITIONIERUNG VON BAUTEILEN**
DEVICE FOR POSITIONING COMPONENTS
DISPOSITIF POUR POSITIONNER DES ÉLÉMENTS STRUCTURELS

(30) Priorität: 21.11.2006 DE 102006055103
(43) Veröffentlichungstag der Anmeldung: 09.09.2009
(73) Patentinhaber: ThyssenKrupp Drauz Nothelfer GmbH, 74076 Heilbronn (DE)
(72) Erfinder: KIPPING, Josef, 66839 Schmelz (DE); SCHÜTZ, Rüdiger, 66839 Schmelz (DE)
(74) Vertreter: Dahlkamp, Heinrich-Leo
(86) Internationale Anmeldenummer: PCT/EP2007/009292
(87) Internationale Veröffentlichungsnummer: WO 2008/061604

(56) Entgegenhaltungen:
- DE-U1- 29 504 267
- JP-A- 57 061 445
- US-A- 5 481 936

## Beschreibung

Die Erfindung bezieht sich auf eine Vorrichtung gemäß Oberbegriff des Anspruches 1, wie z.B. aus der US 5 481 936A bekannt.

In der Kfz-Industrie werden zur Bearbeitung und insbesondere zum Zusammenbau verschiedener Bauteile häufig Dreh- und Schwenkvorrichtungen benötigt, mit denen bestimmte Werkstücke und Bauteile in eine Bearbeitungs- bzw. Montageposition gebracht werden. Diese Vorrichtungen können z. B. von Hand in eine bestimmte Position gedreht und dort fest positioniert werden, sie können aber auch mit z. B. Pneumatikzylindern hin und her geschwenkt werden. Für verschiedene Schwenkwinkel müssen dabei aber jeweils eigene Pneumatikzylinder vorhanden sein, die jeweils unterschiedliche Hübe besitzen.

Aus der DE 295 04 267 U1 ist eine beispielhafte Kniehebelspannvorrichtung bekannt, bei der als Linearantrieb ein abwechselnd beidseitig durch Druckmitteldruck zu beaufschlagender Kolben längsverschieblich in einem Zylinder geführt ist und die Kolbenstange am freien Ende innerhalb des Gehäuses der Kniehebelspannvorrichtung mit einer Kniehebelanordnung verbunden ist, der ein Spannarm zugeordnet ist. Zu der Kniehebelanordnung gehört insbesondere ein im Gehäuse gelagerter Schwenkbolzen, der bei Betätigung des Linearantriebes eine Drehbewegung ausführt. Der Schwenkbolzen erstreckt sich dabei im Rechten Winkel zur Längsrichtung des Kolbens.

Der Erfindung liegt die Aufgabe zu Grunde, eine Vorrichtung zum Positionieren und Schwenken von Bauteilen um beliebig einstellbare Schwenkwinkel vorzuschlagen, bei der ein häufiger Austausch der Schwenkantriebe nicht erforderlich ist.

Die Lösung dieser Aufgabe sieht vor, dass die Antriebsvorrichtung aus einer an sich bekannten Kniehebelspannvorrichtung besteht, wobei ein Linearantrieb über einen Kniehebel mit einem Schwenkbolzen verbunden ist und der Schwenkbolzen form- und/oder kraftschlüssig über eine Aufnahme mit der Aufnahmeplatte verbunden ist und für eine einstellbare Schwenkbewegung der Aufnahmeplatte bis in eine verriegelte, vorgefahrene Endstellung sorgt. Die Verwendung der an sich bekannten Kniehebelspannvorrichtungen als Antrieb für die definierten Schwenkbewegungen der Aufnahmeplatte hat insbesondere den Vorteil, dass die Bauteile in eine positionsgenaue, verriegelte Endstellung gebracht werden können und dabei der Schwenkwinkel auf einfache Weise an dem Linearantrieb der Kniehebelspannvorrichtung eingestellt werden kann. Der Winkel kann dabei insbesondere stufenlos verstellt werden, wobei Winkel von 1° - 135°, vorzugsweise 15° - 135° eingestellt werden. Zudem bietet die Kniehebelspannvorrichtung auch die Möglichkeit der Positionsabfragen des Kolbens.

Die an sich bekannte Kniehebelspannvorrichtung lässt sich ohne Weiteres mit Spannschrauben lösbar mit der erfindungsgemäßen Vorrichtung verbinden. Die Kraftübertragung erfolgt günstigerweise über einen außen profilierten Schwenkbolzen, insbesondere einen Vierkant, der in eine entsprechende Aufnahme axial eingebracht und über Spannschrauben positionsgenau gehalten wird. Die Aufnahme ist direkt oder indirekt mit der Aufnahmeplatte verbunden, insbesondere verschraubt, so dass bei Betätigung des Linearantriebes in der Kniehebelspannvorrichtung und Drehung des Schwenkbolzens auch die Aufnahmeplatte entsprechend gedreht bzw. geschwenkt wird. Vorteilhafterweise ist zwischen dem feststehenden Gehäuse und der Aufnahmeplatte ein Kreuzrollenlager angeordnet.

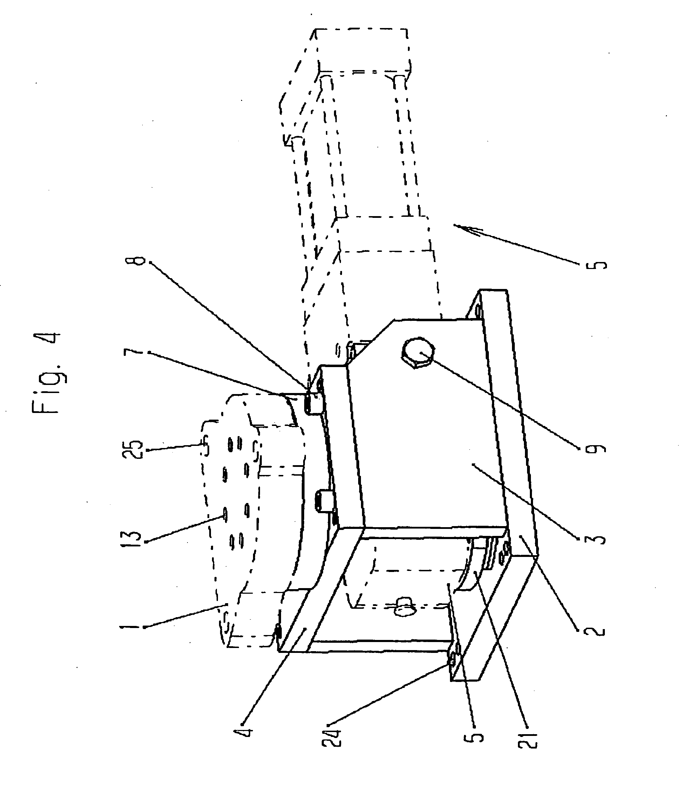

Die Erfindung wird anhand der beigefügten Figuren 1 - 4 beispielsweise näher erläutert. Es zeigen
- Fig. 1: eine Seitenansicht der erfindungsgemäßen Vorrichtung,
- Fig. 2: eine Draufsicht zur Vorrichtung nach Fig. 1,
- Fig. 3: einen Schnitt nach der Linie A-A von Fig. 1 und
- Fig. 4: eine perspektivische Darstellung der erfindungsgemäßen Vorrichtung.

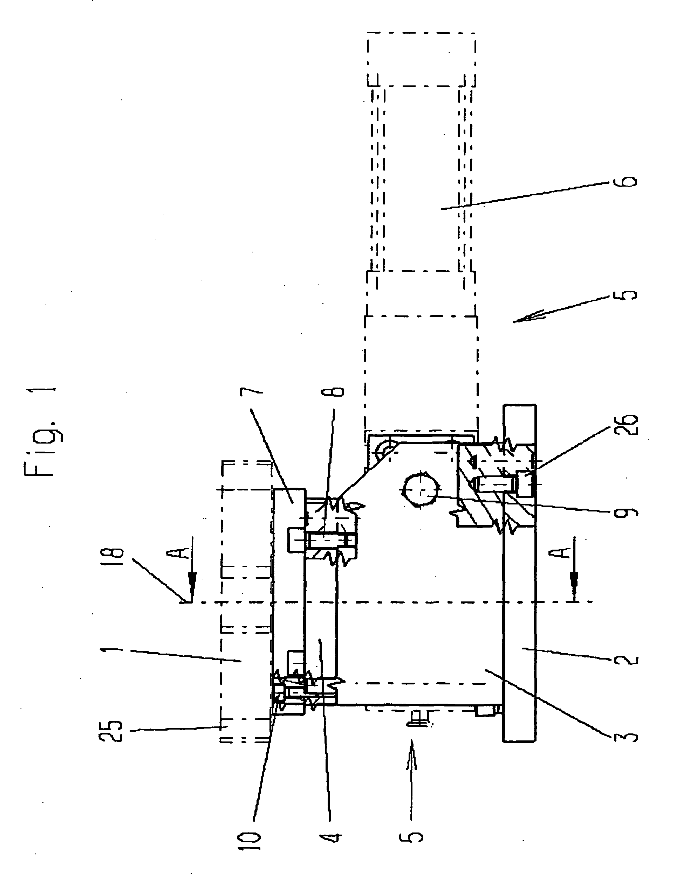

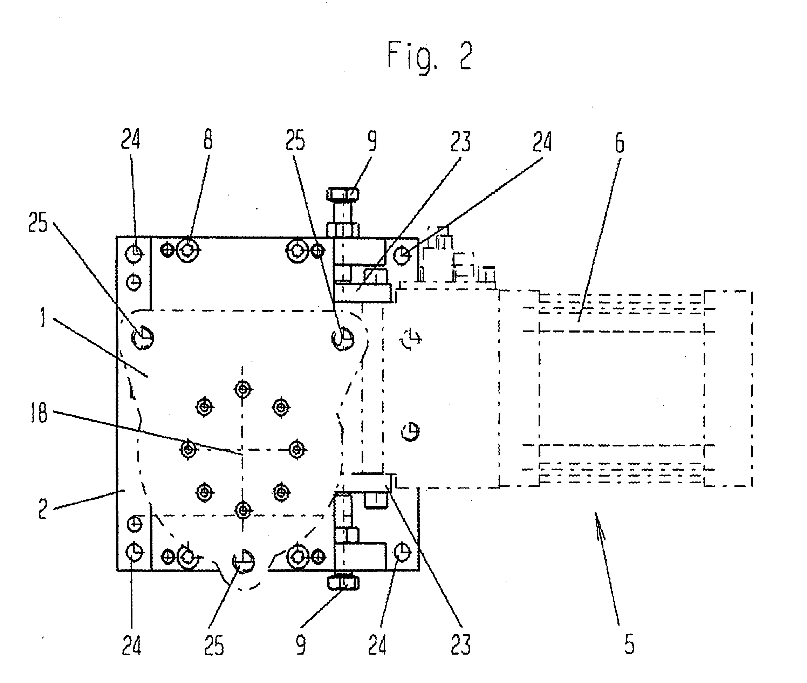

Die erfindungsgemäße dreh- bzw. schwenkbare Aufnahmeplatte 1 besitzt Bohrungen 25 zur Befestigung der zu bearbeitenden oder zu montierenden Bauteile, wobei auch eine an sich bekannte Spannkonsole mit dieser Aufnahmeplatte 1 verschraubt werden kann. Diese Spannkonsolen halten dann die entsprechenden Bauteile. Das Gehäuse der erfindungsgemäßen Vorrichtung besteht aus der Grundplatte 2, den Seitenwänden 3 und der Deckplatte 4, die mit entsprechenden Schrauben 8 und 26 miteinander verbunden werden. In dieses zweiseitige Gehäuse wird von einer Seite die an sich bekannte Kniehebelspannvorrichtung 5 eingebracht und mit Hilfe der Spannschrauben 9 und der Druckplatten 23 genau positioniert und fixiert. Die Kniehebelspannvorrichtung 5 besitzt einen in den Fig. 1 und 2 nur gestrichelt dargestellten Linearantrieb 6, der nach den Darstellungen der Fig. 1 und 2 in waagerechter Richtung nach links und rechts bewegt wird. Mit dem Linearantrieb 6 ist in an sich bekannter Weise eine nicht dargestellte Kniehebelanordnung verbunden, zu der der in der Kniehebelspannvorrichtung 5 gelagerte Schwenkbolzen 16 gehört.

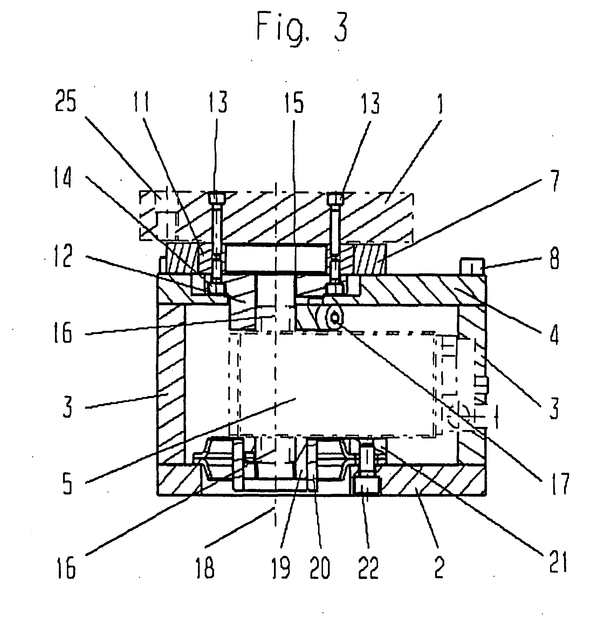

Nach Fig. 3 besitzt der Schwenkbolzen 16 eine senkrechte Drehachse 18. Er ist außen profiliert und insbesondere als Vierkant ausgeführt, der an der oberen Seite in die Aufnahme 15 des Kraftübertragungselementes 12 hineinragt und dort mit Spannschrauben 17 kraft- und formschlüssig mit dem Kraftübertragungselement 12 verbunden ist. Das Kraftübertragungselement 12 wiederum ist über die Schrauben 14 mit dem Innenring 11 eines Kreuzrollenlagers verbunden. Dieser Innenring 11 ist über die Schrauben 13 mit der Aufnahmeplatte 1 verschraubt, so dass der Schwenkbolzen 16, das Kraftübertragungselement 12, der Innenring 11 und die Aufnahmeplatte 1 fest miteinander verbunden sind und in gleicher Weise gedreht werden. Zu dem Innenring 11 gehört der mit Hilfe der Schrauben 10 fest mit der Deckplatte 4 verbundene Außenring 7. Im unteren Teil der Fig. 3 ist das untere Ende des Schwenkbolzens 16 dargestellt, das in eine Adapterhülse 19 hineinragt, die einen kreisrunden Außendurchmesser besitzt und in dem Lager 20 geführt ist, das wiederum mit der Montageplatte 21 verbunden ist. Die Montageplatte 21 ist über Schraube 22 mit der Grundplatte 2 verbunden. Die Grundplatte 2 kann darüber hinaus über die Bohrungen 24 mit einer nicht dargestellten beliebigen Unterlage verschraubt werden.

### Bezugszeichenliste:

- 1: Aufnahmeplatte (z. B. für eine Spannkonsole)
- 2: Grundplatte
- 3: Seitenwand
- 4: Deckplatte
- 5: Kniehebelspannvorrichtung (mit 6)
- 6: Linearantrieb (für 16)
- 7: Außenring (eines Kreuzrollenlagers)
- 8: Schraube (zur Verbindung von 3 und 4)
- 9: Spannschraube (zur Verbindung von 3 und 5)
- 10: Schraube (zur Verbindung von 4 und 7)
- 11: Innenring (eines Kreuzrollenlagers)
- 12: Kraftübertragungselement
- 13: Schraube (zur Verbindung von 1 und 11)
- 14: Schraube (zur Verbindung von 11 und 12)
- 15: Aufnahme (für 16)
- 16: Schwenkbolzen (an 5)
- 17: Spannschraube (an 12)
- 18: Drehachse (von 1, 11, 12, 16, 18)
- 19: Adapterhülse
- 20: Lager (für 19)
- 21: Montageplatte (mit 20)
- 22: Schraube (zur Verbindung von 2 und 21)
- 23: Druckplatte
- 24: Bohrung (an 2 zur Befestigung auf einer Unterlage)
- 25: Bohrung (an 1 zur Befestigung z. B. einer Spannkonsole)
- 26: Schraube (zur Verbindung von 2 und 3)

## Patentansprüche

1. Vorrichtung zur Positionierung von Bauteilen, insbesondere zur Verwendung im Karosseriebau der Kfz-Industrie mit einer drehbaren Aufnahmeplatte (1) für die Bauteile und einer Antriebsvorrichtung zum Drehen der Aufnahmeplatte (1) um eine vorzugsweise senkrecht zur Ebene der Aufnahmeplatte (1) angeordnete Drehachse (18), **dadurch gekennzeichnet, dass** die Antriebsvorrichtung aus einer an sich bekannten Kniehebelspannvorrichtung (5) besteht, wobei ein Linearantrieb (6) über einen Kniehebel mit einem Schwenkbolzen (16) verbunden ist und dass der Schwenkbolzen (16) form- und/oder kraftschlüssig über eine Aufnahme (15) mit der Aufnahmeplatte (1) verbunden ist und für eine einstellbare Schwenkbewegung der Aufnahmeplatte (1) bis in eine verriegelte, vorgefahrene Endstellung sorgt.

2. Vorrichtung nach Anspruch 1, **dadurch gekennzeichnet, dass** die Aufnahmeplatte (1) um einen Winkel von 1° - 135° schwenkbar ist.

3. Vorrichtung nach Anspruch 1 oder 2, **dadurch gekennzeichnet, dass** die Kniehebelspannvorrichtung (5) mittels Spannschraube (9) in einem teilweise offenen Gehäuse der Vorrichtung lösbar angeordnet ist.

4. Vorrichtung nach Anspruch 1, 2 oder 3, **dadurch gekennzeichnet, dass** der Schwenkbolzen (16) profiliert oder als Vierkant ausgebildet und zur Kraftübertragung in eine entsprechende Aufnahme (15) einbringbar ist.

5. Vorrichtung nach Anspruch 1, **dadurch gekennzeichnet, dass** die Aufnahmeplatte (1) in einem Kreuzrollenlager gelagert ist.

6. Vorrichtung nach Anspruch 1, **dadurch gekennzeichnet, dass** die Schwenkbewegung der Aufnahmeplatte (1) durch eine Veränderung des Hubes des Linearantriebes (6) stufenlos einstellbar ist.

## Claims

1. A device for positioning components, in particular for use in bodymaking of the motor vehicle industry, with a rotatable receiving plate (1) for the components and a drive device for turning the receiving plate (1) about an axis of rotation (18), preferably arranged perpendicularly in relation to the plane of the receiving plate (1), **characterized in that** a drive device is comprised of a toggle clamping device (5) known per se, wherein a linear drive (6) is connected via toggle lever to a swivel pin (16) and the swivel pin (16) is positively and/or non-positively connected via a receptacle (15) to the receiving plate (1) and provides an adjustable swivelling movement of the receiving plate (1) into a locked, advanced end position.

2. A device as defined in claim 1, **characterized in that** the receiving plate (1) can be swivelled about an angle of 1° to 135°.

3. A device as defined in claim 1 or 2, **characterized in that** the toggle clamping device (5) is mounted by means of clamping bolt (9) in a partly open casing of the device in a detachable arrangement.

4. A device as defined in any of the preceding claims 1, 2, or 3, **characterized in that** the swivel pin (16) is profiled or configured as a square bolt and can be brought into an appropriate receptacle (15) to enable power transmission.

5. A device as defined in claim 1, **characterized in that** the receiving plate (1) is supported in a cross roller bearing.

6. A device as defmed in claim 1, **characterized in that** the swivelling movement of said receiving plate (1) is infinitely adjustable by varying the stroke of said linear drive (6).

## Revendications

1. Dispositif pour positionner des éléments structurels, en particulier pour l'utilisation dans la construction de carrosseries de l'industrie automobile avec un plateau de réception (1) rotatif pour les éléments structurels et un dispositif d'entraînement pour tourner le plateau de réception (1) autour d'un axe de rotation (18) ordonné de préférence verticalement au plan du plateau de réception (1), **caractérisé en ce que** le dispositif d'entraînement est constitué d'un dispositif de serrage à levier à genouillère (5) connu en soi, un entraînement linéaire (6) étant relié à un axe de pivotement (16) via un levier à genouillère et que l'axe de pivotement (16) est relié au plateau de réception (1) par liaison de forme et de force via un dispositif de logement (15) et qu'il assure un mouvement de pivotement réglable du plateau de réception (1) jusque dans une position finale avancée verrouillable.

2. Dispositif selon la revendication 1, **caractérisé en ce que** le plateau de réception (1) est pivotable autour d'un angle de 1 à 135°.

3. Dispositif selon la revendication 1 ou 2, **caractérisé en ce que** le dispositif de serrage à levier à genouillère (5) est monté dans un boîtier en partie ouvert du dispositif à l'aide d'un boulon de serrage (9) et qu'il est amovible.

4. Dispositif selon la revendication 1, 2 ou 3, **caractérisé en ce que** l'axe de rotation (16) a la forme d'un profil ou d'un quatre-pans et qu'il peut être monté dans un logement (15) adéquat pour assurer la transmission de la force.

5. Dispositif selon la revendication 1, **caractérisé en ce que** le plateau de réception (1) est logé dans un palier à rouleaux en croix.

6. Dispositif selon la revendication 1, **caractérisé en ce que** le mouvement de pivotement du plateau de réception (1) est réglable en continu par modification de la course de l'entraînement linéaire (6).
